**Europäisches Patentamt**

**European Patent Office**

**Office européen des brevets**

(11) Publication number: **0 055 004**
**B1**

(12) # EUROPEAN PATENT SPECIFICATION

(45) Date of publication of patent specification: **08.04.87**

(51) Int. Cl.⁴: **C 21 C 5/38, C 04 B 14/00, C 02 F 11/00**

(21) Application number: **81201383.7**

(22) Date of filing: **17.12.81**

(54) **Process for processing moist compositions containing pollution-causing substances and composition.**

(30) Priority: **18.12.80 NL 8006884**

(43) Date of publication of application:
**30.06.82 Bulletin 82/26**

(45) Publication of the grant of the patent:
**08.04.87 Bulletin 87/15**

(84) Designated Contracting States:
**AT BE CH DE FR GB IT LI LU NL SE**

(56) References cited:
**EP-A-0 038 235**
**EP-A-0 038 599**
**WO-A-82/00998**
**GB-A- 882 630**
**GB-A-1 017 424**
**GB-A-1 587 023**
**US-A-4 116 705**
**US-A-4 226 630**

(73) Proprietor: **PELT & HOOYKAAS B.V.**
**1 Bijlstraat**
**NL-3087 AA Rotterdam (NL)**

(72) Inventor: **Hooykaas, Carel Willem Jan**
**44 Oranjelaan**
**NL-3062 BT Rotterdam (NL)**

(74) Representative: **van der Veken, Johannes Adriaan et al**
**EXTERPATENT B.V. Willem Witsenplein 4**
**NL-2596 BK 's-Gravenhage (NL)**

Courier Press, Leamington Spa, England.

## Description

The invention relates to a process for processing a moist metal or metal compounds containing composition, particularly compositions containing extractable compounds which may be easily lixiviated from said composition and cause pollution, by mixing said composition with a compound presenting puzzolanic properties, particularly fly ash.

Such a process is known from US—A 4 226 630 wherein solid leach resistant bodies are formed by mixing in one step aqueous metal sludges with fly ash obtained by burning coal, such fly ash is a compound presenting puzzolanic properties.

A similar process is disclosed in US—A 4 116 705 wherein a heavy metal sludge is mixed with cement and aluminosilicate, preferably fly ash, by forming a flowable aqueous slurry which sets into a rigid rock like mass. The metal sludge may be waste obtained from melting and metal refining industry wastes and iron and steel industry wastes. Preferably a hydroxide of iron is added to the sludge.

At least in the production of steel by blowing oxygen in molten iron and adding calciumoxide gases are evolved with products which are removed in a moist washing device and recovered in a precipitation tank in order to avoid environmental pollution due to these products.

In the past it was possible to recycle the separated products to the blast furnaces wherein iron ore is used. Due to zinc as now being present in the starting iron ore pellets, it is impossible to recycle the high amount of ironoxide containing separated product to the blast furnace as this would to unacceptable high zinc concentrations in the blast furnaces. This causes difficulties as zinc evaporates and precipitates on to the controlling apparatus and valves as used in the automatized blast furnaces so that the working of the blast furnaces is impaired.

On the other hand, this product being also known under the name "oxysludge" is difficult to handle due to its stickiness after removal of water in an amount as high as possible by means of a vacuum filter so that this product cannot be used for valuable applications.

It has been tried to overcome this disadvantage by adding calciumoxide in order to obtain a product which can be handled more easily as disclosed in GB—A 1 017 424.

However, the addition of calcium oxide is relatively expensive in comparison with the value of the product as obtained in the form of oxysludge, whilst moreover, the substances being present in the sludge after this treatment may still be easily lixiviated, so that storage in open air is impossible.

The invention now aims to provide a simpler solution for processing such compositions.

This aim is attained according to the invention in that the process comprises a first step in which the composition is mixed with the compound presenting puzzolanic properties in such an amount that small spherelike particles are formed which spherelike particles are treated in a second step in the presence of a further amount of said compound, without crushing or compressing said spherelike particles as obtained in the first step.

By applying this two step process spherelike particles are obtained and moreover an amount of drying agent in the form of the compound presenting puzzolanic properties, such as fly ash, can be saved and moreover this process provides easily handable particles.

It has been found that particularly mixing a moist sticky composition such as a composition removed from the gases evolved from steel treated in steel converters with a compound presenting puzzolanic properties provides a very appropriate product, particularly if mixed with at least 10% fly ash, more particularly 15% fly ash. By mixing according to the invention of such a sticky sludge with a compound presenting puzzolanic properties, particularly fly ash, spheres of the sludge coated with a skin of a compound presenting puzzolanic properties are obtained during mixing of the mass.

It will be obvious that in this way a composition is obtained which is easy to handle and to process, as the original sticky mass has lost its sticky properties.

Particularly by adding at most 35%, preferably 30% of fly ash a dry mass is obtained, which is very good processable.

Moistening a product containing 30% of fly ash, provides a non-tacky mixture which is transformed into a hard material and can then be broken into smaller particles. The formation of a hard material is due to the presence of the compound presenting puzzolanic properties.

A composition processed according to the invention is particularly suitable as material in road construction or for sound insulation and moreover, as additive in concrete, particularly heavy concrete. This is due to the high iron content of the "oxysludge".

Using said composition in concrete provides the additional advantage that less mortar and water are required in order to obtain a mortar providing a good concrete quality.

Another use of the composition as obtained by means of the invention is as filler material in road construction.

Advantageously, the composition may contain up to 5% of a hydraulic agent or of a curing activator activating the curing of the compound presenting puzzolanic properties, thus providing rapidly a hard product, which will gradually become harder, due to the presence of the compound presenting puzzolanic properties. Such an activator may be cement, calciumchloride, sodium-chloride or calciumoxide.

Crushing said sphere like particles can be particularly avoided by subjecting the particles to a whirling mixing action in the second step.

Preferably 1/3 to 2/3 of the total amount of the compound presenting puzzolane properties is used in the first step and the remaining amount in the second step.

In a very preferred embodiment of the invention the final composition is obtained by adding at least 10% and preferably at most 35% of a compound presenting puzzolane properties.

It is recommended to mix 600 to 800 kg of sludge, particularly oxisludge, with 120 to 180 kg of the compound presenting puzzolane properties in the first step and to mix the broken particles of the first step with 70 to 130 kg of the compound presenting puzzolane properties.

The spherelike particles as obtained in the process of the invention may be formed to a solid mass to be stored in the open air or a mass of the spherelike particles as obtained in the second step may be compressed.

The amount of compound presenting puzzolane properties should preferably not bind more than 35% of water as otherwise a doughlike mass is obtained, which is not appropriately processable.

The invention will be illustrated by some non limitative examples.

### Example I

In a Linde Donauwitz converter oxisteel is prepared by blowing oxygen into a liquid iron composition, calciumoxide being added to the iron composition. In this treatment gases with dust particles and vaporized metals and vaporized metal compounds evolge from the converter, which gases are washed in a moist washing device and subsequently recovered on a filter. This filter is connected with a vacuum filter for recovering the tacky oxisludge containing an amount of water as small as possible. This product has the following composition:

$Fe_2O_3$: 75% by weight;     $SiO_2$: 2% b.w.;
Zn: 0,4% b.w. CaO: 10% b.w.; rest: water

Notwithstanding the high amounts of ironoxide being present this oxisludge cannot be added to raw iron oxide to be treated in a blast furnace, as this would lead to zinc accumulation in the blast furnace. Such a high zinc concentration would involve that zinc would evaporate and precipitate on to many controlling and measuring devices and valves and thus, the working of the blast furnace would be impaired.

700 kg of oxisludge containing 25% water is mixed with 150 kg of fly ash. The 850 kg of spherelike particles as obtained are subjected in a whirling mixing device to a whirling action without crushing or compressing the particles.

Simultaneously 100 kg fly ash is added. There are obtained spherelike particles suitable for road construction.

If the same amount of oxisludge is dried in one step more irregular particles are obtained and 300 kg (instead of 250 kg) of fly ash is used. This means a saving of 16% fly ash by the invention.

### Example II

The process of example I is repeated and 3% cement is added as a curing activator to the oxisludge before mixing. After spraying water onto the spherelike particles as obtained from the whirlingmixing device these will cure to a very hard product. Similar results are obtained by added 4% of calciumchloride or sodiumchloride.

Amounts of more than 5% cement are not recommended.

### Example III

700 kg of dewatered dredged sludge containing 25% of water is mixed with 150 kg of fly ash and in a second step the spherelike particles as obtained are subjected to a whirling action in a whirling mixing device without crushing or compressing the particles, in the presence of still another 100 kg of fly ash.

The process provides small spherelike particles which are suitable as road construction material after drying.

### Example IV

The process of example II is repeated with a gypsum-containing sludge obtained in a wet process of preparing phosphoric acid.

### Example V

The process of example III is repeated with one or more sludges as obtained in purifying phosphoric acid obtained according to the wet route.

**Claims**

1. A process for processing a moist metal or metal compounds containing composition, particularly compositions containing extractable compounds which may be easily lixiviated from said composition and cause pollution, by mixing said composition with a compound presenting puzzolanic properties, particularly fly ash, characterised in that the process comprises a first step in which the composition is mixed with the compound presenting puzzolanic properties in such an amount that small spherelike particles are formed which spherelike particles are treated in a second step in the presence of a further amount of said compound, without crushing or compressing said sphere-like particles as obtained in the first step.

2. A process according to claim 1, characterised in that the particles as formed in the first step are subjected to a whirling mixing action in the second step.

3. A process according to claim 1 or 2 characterised in that 1/3 or 2/3 of the total amount of the compound presenting puzzolanic properties is used in the first step and the remaining amount in the second step.

4. A process according to claim 1—3, characterised in that 600 to 800 kg sludge composition is mixed with 120 to 180 kg of the compound, presenting puzzolanic properties in the first step and 70 to 130 kg of said compound is added in the second step.

5. A process according to claim 1—4, characterised in that the particles as formed in the second step are compressed to form a solid mass.

6. A process according to claim 1—5, characterised in that at most 5% of a curing activator is added to the wet composition.

7. A process according to claim 1—6, characterised in that the composition consists of a composition comprising at least one solid product separated from gases evolved during the preparation of steel in steel converters known as oxysludge.

8. A process according to claim 1—7, characterised in that at least 10% preferably more than 15% of the compound presenting puzzolanic properties is present in the end product.

9. A process according to claim 1—8, characterised in that 25 to 35% of the compound presenting puzzolanic properties is present in the end product.

10. A process as claimed in one or more of the preceding claims characterised in that water is sprayed onto the sphere like particles as formed in the second step.

**Patentansprüche**

1. Verfahren zur Behandlung eines nassen, ein Metall oder Metallverbindungen enthaltenden Gemischs, insbesondere von Gemischen, die extrahierbare Verbindungen enthalten, die aus dem Gemisch leicht ausgelaugt werden können und Verschmutzung verursachen, durch Mischen des Gemischs mit einer Puzzolaneigenschaften aufweisenden Verbindung, insbesondere Flugasche, dadurch gekennzeichnet, daß es folgende Schritte umfaßt:

1) Mischen des Gemisches mit der Puzzolaneigenschaften aufweisenden Verbindung in einer solchen Menge, daß kleine kugelförmige Teilchen entstehen, und

2) Behandlung der kugelförmigen Teilchen mit einer weiteren Menge dieser Verbindung, ohne daß die im ersten Schritt erhaltenen kugelförmigen Teilchen zerquetscht oder zusammengedrückt werden.

2. Verfahren nach Anspruch 1, dadurch gekennzeichnet, daß die im ersten Schritt gebildeten Teilchen im zweiten Schritt einer Wirbelmischung unterzogen werden.

3. Verfahren nach Anspruch 1 oder 2, dadurch gekennzeichnet, daß im ersten Schritt 1/3 bzw. 2/3 der Gesamtmenge der Puzzolaneigenschaften aufweisenden Verbindungen verwendet werden und im zweiten Schritt die restliche Menge.

4. Verfahren nach Anspruch 1 bis 3, dadurch gekennzeichnet, daß im esten Schritt 600 bis 800 kg Schlammischung mit 120 bis 180 kg der Puzzolaneigenschaften aufweisenden Verbindung vermischt werden und im zweiten Schritt 70 bis 130 kg dieser Verbindung zugesetzt werden.

5. Verfahren nach Anspruch 1 bis 4, dadurch gekennzeichnet, daß die im zweiten Schritt gebildeten Teilchen zu einer festen Masse zusammengepreßt werden.

6. Verfahren nach Anspruch 1 bis 5, dadurch gekennzeichnet, daß dem nassen Gemisch höchstens 5 % eines Härtungsaktivators zugesetzt werden.

7. Verfahren nach Anspruch 1 bis 6, dadurch gekennzeichnet, daß das Gemisch wenigstens ein festes produkt umfaßt, das aus den bei der Stahlherstellung in Stahlkonvertern entstehenden abgasen abgetrennt wurde und als Sauerstoffaufblasschlamm bekannt ist.

8. Verfahren nach Anspruch 1 bis 7, dadurch gekennzeichnet, daß im Endprodukt wenigstens 10 %, vorzugsweise jedoch mehr als 15 % der Puzzolaneigenschaften aufweisenden Verbindung enthalten sind.

9. Verfahren nach Anspruch 1 bis 8, dadurch gekennzeichnet, daß im Endprodukt 25 bis 35 % der Puzzolaneigenschaften aufweisenden Verbindung enthalten sind.

10. Verfahren nach einem der Ansprüche 1 bis 9, dadurch gekennzeichnet, daß die im zweiten Schritt gebildeten kugelförmigen Teilchen mit Wasser besprüht werden.

**Revendications**

1. Procédé de traitement de compositions humides contenant des métaux ou des composés métalliques, en particulier de compositions contenant des composés pouvant être lessivés, qu'il est facile de lixivier de ladite composition et qui sont polluants, consistant à mélanger ladite composition avec un composé ayant des propriétés pouzzolaniques, en particulier des cendres volantes, caractérisé en ce que le procédé comprend une première étape, au cours de laquelle la composition est mélangée avec le composé ayant des propriétés pouzzolaniques dans une proportion telle qu'il se forme de petites particules sensiblement sphériques, ces particules sensiblement sphériques étant traitées au cours d'une deuxième étape en présence d'une quantité supplémentaire dudit composé, sans écrasement ni compression desdites particules sensiblement sphériques obtenues au cours de la première étape.

2. Procédé selon la revendication 1, caractérisé en ce que les particules telles que constituées au cours de la première étape sont soumises à une force par tourbillonnement au cours de la deuxième étape.

3. Procédé selon la revendication 1 ou 2, caractérisé en ce qu'un tiers ou les deux tiers de la quantité totale du composé ayant des propriétés pouzzolaniques est utilisé au cours de la première étape et le restant au cours de la deuxième étape.

4. Procédé selon la revendication 1—3, caractérisé en ce que 600 à 800 kg de composition boueuse sont mélangés avec 120 à 180 kg du composé ayant des propriétés pouzzolaniques au cours d'une première étape et en ce qu'on ajoute 70 à 130 kg dudit composé au cours de la deuxième étape.

5. Procédé selon la revendication 1—4, caractérisé en ce que les particules constituées au cours de la deuxième étape sont comprimées pour former une masse solide.

6. Procédé selon la revendication 1—5, caractérisé en ce qu'on ajoute 5% au plus d'un produit d'activation du durcissement à la composition humide.

7. Procédé selon la revendication 1—6, caractérisé en ce que la composition consiste en une composition comprenant au moins un produit solide séparé des gaz qui se dégagent lors de la préparation d'acier dans des convertisseurs d'acier et qui est connu en tant que boue d'oxyde.

8. Procédé selon la revendication 1—7, caractérisé en ce qu'au moins 10%, de préférence plus de 15%, du composé ayant des propriétés pouzzolaniques sont présents dans le produit final.

9. Procédé selon la revendication 1—8, caractérisé en ce que 25% à 35% du composé ayant des propriétés pouzzolaniques sont présents dans le produit final.

10. Procédé selon l'une ou plusieurs des revendications précédentes, caractérisé en ce qu'on pulvérise de l'eau sur les particules sensiblement sphériques constituées au cours de la deuxième étape.